# EUROPEAN PATENT SPECIFICATION

(11) **EP 3 667 329 B1**
(45) Date of publication and mention of the grant of the patent: **15.09.2021**
(21) Application number: 19215466.4
(22) Date of filing: 12.12.2019
(51) Int. Cl.: G01P 3/487, A47L 11/24, A47L 11/40, A47L 9/00, A47L 9/28

(54) **WHEEL ROTATION DETECTION COMPONENT AND ROBOTIC CLEANER**
KOMPONENTE ZUR ERKENNUNG DER RADDREHUNG UND REINIGUNGSROBOTER
COMPOSANT DE DÉTECTION DE ROTATION DE ROUES ET ROBOT NETTOYEUR

(30) Priority: 13.12.2018 CN 201811524250
(43) Date of publication of application: 17.06.2020
(73) Proprietor: Midea Robozone Technology Co., Ltd., Suzhou, Jiangsu Province (CN)
(72) Inventor: HU, Wei, Suzhou, Jiangsu 215100 (CN); WEI, Xianmin, Suzhou, Jiangsu 215100 (CN); SHIQING, Xing, Suzhou, Jiangsu 215100 (CN)
(74) Representative: RGTH

(56) References cited:
- EP-A1- 1 732 192
- WO-A2-2015/074914
- CN-A- 106 419 744
- JP-A- S61 294 512
- US-B2- 7 463 022

## Description

### TECHNICAL FIELD

The disclosure belongs to the technical field of wheel rotation detection, and particularly relates to a wheel rotation detection component and a robotic cleaner thereof.

### BACKGROUND

When an existing robotic cleaner, such as a sweeper, works, it is difficult to judge whether a driving wheel set slips or not, which causes that only the driving wheel set rotates but the position of the sweeper is not changed. The slip of the driving wheel set has certain effects on the cleaning efficiency, coverage and map planning cleaning of the sweeper. In order to detect whether the sweeper is displaced or not, the most widely used detection scheme on the market is to detect the rotation of a universal wheel of the sweeper. Because the universal wheel has no rotation power, the universal wheel can be rotated only when the driving wheel set drives the entire sweeper to move. Therefore, it is possible to judge whether the sweeper has a position change or not by detecting the rotation condition of the universal wheel.

At present, two schemes for detecting the rotation of the universal wheel are generally provided: one scheme is that the rotation of the universal wheel is detected by infrared rays; and the other scheme is that a magnet is disposed on the universal wheel, and a Hall sensor is used for detecting the change of a magnetic field to judge whether the universal wheel rotates or not. The two detection schemes can detect the rotation condition of the universal wheel, but the universal wheel is assembled on a universal wheel support capable of rotating by 360°, and a detection element only can be assembled on a body far away from the universal wheel and cannot be assembled on the universal wheel support capable of rotating because the detection element has connecting wires. Due to farther distance, the external interference is large; and due to shielding of the universal wheel support, the detection error is larger, and the detection accuracy is low. If the detection element is disposed on the universal wheel support capable of rotating by 360°, the distance between the detection element and the universal wheel is reduced and the external interference is reduced, but the processing of connecting wires between the detection element and the body also leads to an increase in cost, an increase in reliability difficulty and an increase in production difficulty. Therefore, at present, the problem of far distance detection between the detection element and the universal wheel is still not solved.

CN 106419744 A discloses a velocity-measuring arrangement for a mechanical wheel rotatably supported in a housing, said housing having a hollow central shaft and being rotatable by means of said shaft with regard to a main body structure, forming a kind of universal wheel.

The mechanical wheel drives two driven wheels. Rotation of the driven wheels is converted into a reciprocating axial movement of a transmission rod placed centrally in said shaft. The reciprocating motion of the transmission rod is detected with an optical sensing arrangement placed in the main body structure and used to determine the rotation of the mechanical wheel.

JP S61 294512 A discloses a method to set freely the driving path of a carrier by detecting the angle (posture) of the carrier body as well as the azimuth of the carrier driving direction against the earth magnetism for control of the carrier driving direction and at the same time detecting the position orthogonal to the driving direction for control of the carrier position within its driving path.

The rotation of a caster wheel is mechanically transmitted to an encoder by means of a transmission shaft and a gear arrangement, allowing the detection of the wheel speed.

WO 2015/074914 A2 discloses an electric machine, in particular an electric motor, comprising a stator and a rotor and a stationary sensor device for sensing the relative position between the stator and the rotor, wherein the sensor device comprises a flux-conducting element and a magnetic sensor element and the magnetic flux of a magnet revolving with the rotor can be conducted to the sensor element by means of the flux-conducting element.

EP 1 732 192 A1 discloses a magnetic coupling device for motors controlled electronically for application in drive units of mechanical systems such as electric window regulators for motor vehicles. The coupling device is an independent piece which comprises a support element which on being coupled to the casing of an electric motor and to an electronic control module, concentrates and directs the magnetic field produced inside the motor to the electronic module through a magnetic flux concentrator element, so that field sensors in said electronic module detect the variations in the field and so regulate the operation of the motor.

US 7 463 022 B2 discloses a position sensor system including a magnet, a magnetic flux sensor positioned a distance away from the magnet, the magnetic flux sensor and the magnet defining a flux path therebetween, and a flux guide positioned in the flux path to guide magnetic flux to the magnetic flux sensor.

### SUMMARY

Based on the above, a main objective of the disclosure is to provide a wheel rotation detection component and a robotic cleaner thereof to solve the problem of far distance detection between a wheel and a detection element.

In order to achieve the above objective, the technical solution of the disclosure is implemented as follows: at least a part of a wheel rotation detection component is connected to a main body of a supported object, the wheel rotation detection component includes a support frame, a wheel, a magnet and detection elements for inducing a change of a magnetic field of the magnet to detect a rotation information of the wheel, the wheel is movably connected to the support frame, the magnet is fixed on the wheel, the wheel rotation detection component further includes a magnetic conduction shaft capable of being magnetized by the magnet to conduct the magnetic field to the detection elements, one end of the magnetic conduction shaft is connected to the support frame, the other end of the magnetic conduction shaft is connected to the main body, and the detection elements are connected to the main body.

The support frame is configured to allow rotation of the support frame around the magnetic conduction shaft as a rotating center; by virtue of the connection of the magnetic conduction shaft, movable connection between the support frame and the main body is achieved.

Preferably, the magnetic conduction shaft includes a shaft body, a first connector for connecting the main body and a second connector for connecting the support frame, the first connector and the second connector are respectively connected to two ends of the shaft body, the first connector is provided with a first connecting structure for movably connecting with the main body, and the second connector is provided with second connecting structures for fixedly or movably connecting with the support frame.

Preferably, the main body includes a base and a connecting part disposed on the base, the connecting part is provided with a first connecting hole for connecting the magnetic conduction shaft, a wall of the first connecting hole is provided with a bulge, the first connecting structure includes a slot, and the bulge is positioned in the slot.

Preferably, the detection elements are disposed on the side wall or an end or a bottom of the connecting part.

Preferably, a plurality of detection elements are disposed and uniformly distributed.

Preferably, the support frame includes a frame body and a second connecting hole formed in the frame body and configured to connect the second connector, and the second connector is inserted in the second connecting hole.

Preferably, the second connecting structures include positioning rings and/or positioning grooves, a wall of the second connecting hole is correspondingly provided with limiting protrusions, the limiting protrusions abut against the positioning rings, or the limiting protrusions are clamped in the positioning grooves.

Preferably, a plurality of positioning rings or positioning grooves are provided, the positioning rings or the positioning grooves are disposed at intervals, and the number of limiting protrusions is the same as the number of the positioning rings or the positioning grooves.

Preferably, the wheel is provided with a mounting groove, and the magnet is fixed in the mounting groove.

The disclosure also provides a robotic cleaner, including a main body and further including the above wheel rotation detection component, and at least a part of the wheel rotation detection component is connected to the main body. The wheel rotation detection component and the robotic cleaner thereof provided by the disclosure have the advantages that the magnet in the wheel rotation detection component is disposed on the wheel, the detection elements are disposed on the main body, and the magnetic conduction shaft capable of being magnetized by the magnet to conduct the magnetic field is adopted, so that by virtue of the connection of the magnetic conduction shaft, movable connection between the support frame and the main body is achieved; furthermore, the magnetic field of the magnet is conducted to the detection elements through the magnetic conduction shaft, so that real-time detection on the rotation condition of the wheel is achieved, the accuracy of the detection result is high, and the problems of larger detection error and low detection accuracy caused by far distance between the magnet and a detection element are overcome; and by virtue of the arrangement of the wheel rotation detection component, under the conditions that parts are not additionally provided and additional cost and design, production and manufacturing difficulty are not increased, the problem of far distance detection between the detection elements and the wheel is effectively solved.

### BRIEF DESCRIPTION OF DRAWINGS

In order to more clearly illustrate the technical solutions in the embodiments of the disclosure, the drawings required for the embodiments will be briefly described below. It is apparent that the drawings in the following description are only some embodiments of the disclosure. Those skilled in the art can also obtain other drawings according to these drawings without any creative work.
FIG. 1 is a schematic view of a wheel rotation detection component provided by an embodiment of the disclosure, wherein detection elements are omitted.
FIG. 2 is a schematic view of a robotic cleaner provided by an embodiment of the disclosure.
FIG. 3 is a partially exploded view of a robotic cleaner provided by an embodiment of the disclosure.
FIG. 4 is a partially cross-sectional schematic view of a robotic cleaner provided by an embodiment of the disclosure.
FIG. 5 is a partially enlarged view of a part A in FIG. 4.

### List of Reference Numerals:

11. support frame; 111. frame body; 112. second connecting hole; 113. limiting protrusion; 12. wheel; 121. mounting groove; 122. rotating shaft; 13. magnet; 14. detection element; 15. magnetic conduction shaft; 151. shaft body; 152. first connector; 1521. first connecting structure; 153. second connector; 1531. second connecting structure; 21. main body; 211. base; 212. connecting part; 213. first connecting hole; 214. bulge.

### DETAILED DESCRIPTION

In order to make the objectives, technical solutions and advantages of the disclosure more clear, the disclosure will be further described in detail below with reference to the drawings and embodiments. It should be understood that the specific embodiments described herein are merely intended to illustrate the disclosure and are not intended to limit the disclosure.

The specific technical features and embodiments described in the specific embodiments may be combined in any suitable mode without contradiction. For example, different implementation modes may be formed by a combination of different specific technical features/embodiments. In order to avoid unnecessary repetition, various possible combination modes of various specific technical features/embodiments in the disclosure are not described separately.

At least a part of a wheel rotation detection component provided by an embodiment of the disclosure is connected to a main body 21 of a supported object. The supported object refers to an object characterized in that the movement of the overall position of the object needs to be achieved by mounting a wheel and the movement condition of the overall position needs to be detected, such as a sweeper and an explosive disposal robot. Therefore, whether the actual movement of the effective position of the entire sweeper occurs or not is obtained by detecting the rotation condition of the wheel, so as to be favorable for obtaining an actual working state and ensuring that the corresponding work may be performed reliably. In the embodiments of the disclosure, in order to facilitate the understanding of the technical solution, the wheel rotation detection component is applied to the sweeper for illustration, and herein, the application range of the wheel rotation detection component is not limited.

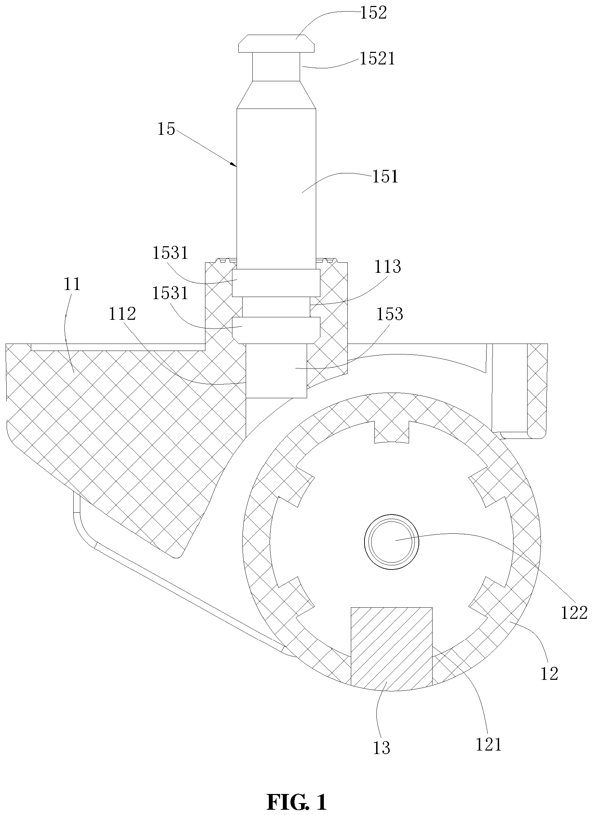

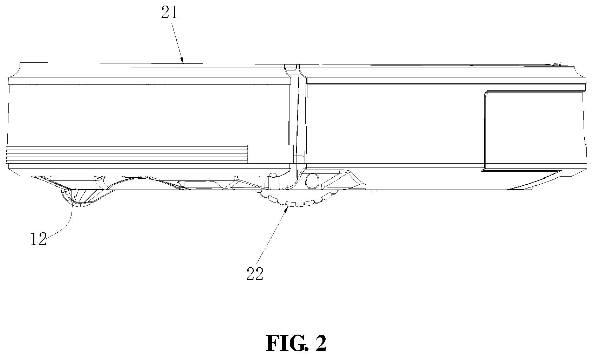

Specifically, as shown in FIG. 1 and FIG. 2, in the embodiments of the disclosure, the wheel rotation detection component includes a support frame 11, a wheel 12, a magnet 13 and detection elements 14 for inducing a change of a magnetic field of the magnet 13 to detect the rotation information of the wheel 12. The wheel 12 is movably connected to the support frame 11 and may flexibly rotate relative to the support frame 11. The magnet 13 is fixed on the wheel 12 and may rotate together with the wheel 12 when the wheel 12 rotates. The wheel rotation detection component further includes a magnetic conduction shaft 15 capable of being magnetized by the magnet 13 to conduct the magnetic field to the detection elements 14, one end of the magnetic conduction shaft 15 is connected to the support frame 11, the other end of the magnetic conduction shaft 15 is connected to the main body 21, and the detection elements 14 are connected to the main body 21. By virtue of such an arrangement, because the magnetic conduction shaft 15 is movably connected to the main body 21 and may rotate relative to the main body 21 by 360°, under the connection of the magnetic conduction shaft 15, the support frame 11 may rotate around the magnetic conduction shaft 15 as a rotating center to drive the wheel 12 to rotate so as to achieve direction adjustment during position movement. The principle of inducing the magnetic field of the magnet 13 by the detection elements 14 to detect the rotation condition of the wheel 12 is as follows: when the magnet 13 is close to the detection elements 14, a magnetic field is generated around the detection elements 14; when the detection elements 14 induce the change of the magnetic field, converted electric signals of different strength are transferred to a control module. When the magnet rotates to a position away from the detection elements 14, the strength of the magnetic field around the detection elements 14 is reduced; and the electric signals converted by the detection elements 14 are also weakened, and the control module judges whether the wheel 12 rotates or not by analyzing the change of the strength of the magnetic field induced by the detection elements 14, thereby judging whether the sweeper changes the position thereof or not. Thus, by adopting the arrangement mode that the magnet 13 is disposed on the wheel 12, the detection elements 14 are disposed on the main body 21 and the support frame 11 and the main body 21 are connected by the magnetic conduction shaft 15 capable of being magnetized and capable of conducting the magnetic field, the structural design of the components of the existing wheel 12 is not changed, and the detection elements 14 are still fixed on the main body 21 and have a farther distance from the magnet 13 on the wheel 12. However, the positions of the magnetic conduction shaft 15 and the detection elements 14 and the position at which the magnetic conduction shaft 15 may be magnetized by the magnet 13 are not changed. By conducting the magnetic field through the magnetic conduction shaft 15, even if the support frame 11 continuously rotates and even shields the magnet 13, the detection elements 14 may still accurately induce the change condition of the magnetic field caused by the rotation of the magnet 13 driven by the wheel in real time, thereby accurately and reliably detecting the rotation condition of the wheel 12. By virtue of this solution, under the conditions that parts are not additionally provided and additional cost and design, production and manufacturing difficulty are not increased, the problem of far distance detection between the detection elements 14 and the wheel 12 is effectively solved, and the detection objective of accurately detecting whether the wheel 12 actually rotates or not is achieved.

On the sweeper, the rotation of the wheel 12 is driven by other driving wheel sets. When the wheel 12 rotates, it can be known that the overall position is moved. Thus, by virtue of the arrangement of the above wheel rotation detection component, the rotation condition of the wheel 12 may be accurately and reliably detected so as to detect whether the sweeping position of the sweeper is actually moved or not and improve the cleaning efficiency.

Specifically, the magnetic conduction shaft 15 is made of a material capable of being magnetized and capable of conducting the magnetic field, such as iron or steel, simultaneously has high support strength and may reliably support the main body 21.

Specifically, as shown in FIG. 1, the magnetic conduction shaft 15 includes a shaft body 151, a first connector 152 for connecting the main body 21 and a second connector 153 for connecting the support frame 11, the first connector 152 and the second connector 153 are respectively connected to two ends of the shaft body 151. The first connector 152 is provided with a first connecting structure 1521 for achieving movable connection with the main body 21, and the second connector 153 is provided with second connecting structures 1531 for achieving fixed or movable connection with the support frame 11. Thus, during connection, the first connector 152 is inserted in the main body 21, and under the connection action of the first connecting structure 1521, the magnetic conduction shaft 15 does not fall from the main body 21 but may rotate relative to the main body 21 so as to achieve adjustment on the running direction of the wheel 12. By inserting the second connector 153 in the support frame 11, under the connection action of the second connecting structures 1531, fixed connection or movable connection between the magnetic conduction shaft 15 and the support frame 11 is achieved. During specific connection, the first connector 152 and the main body 21 may be movably connected or fixedly connected. When the first connector 152 and the main body 21 are fixedly connected, the second connector 153 and the support frame 11 need to be movably connected, thereby ensuring that the wheel 12 may rotate along a circumferential direction to achieve direction adjustment.

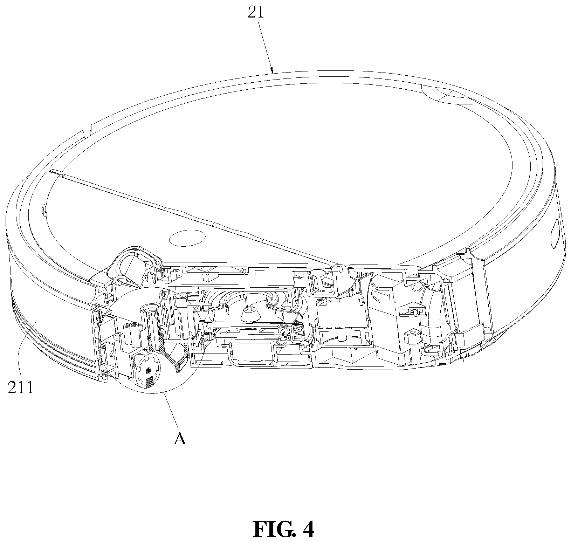

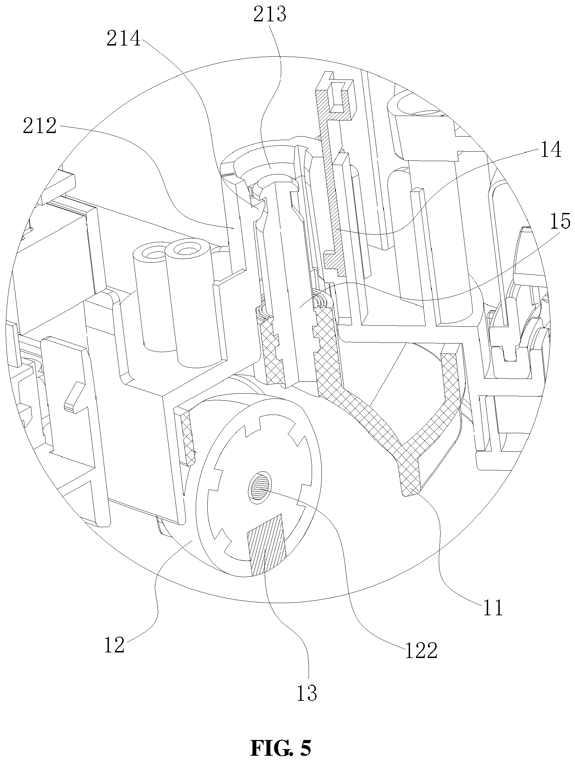

Specifically, as shown in FIG. 4 and FIG. 5, in the embodiments of the disclosure, the main body 21 includes a base 211 and a connecting part 212 disposed on the base 211, the connecting part 212 is provided with a first connecting hole 213 for connecting the magnetic conduction shaft 15, a wall of the first connecting hole 213 is provided with a bulge 214, and the first connecting structure 1521 includes a slot. When the first connector 152 is inserted in the first connecting hole 213, the bulge 214 is positioned in the slot to achieve movable connection between the magnetic conduction shaft 15 and the main body 21. The bulge 214 and the slot cooperate to limit the position of connection between the entire magnetic conduction shaft 15 and the main body 21, so that the magnetic conduction shaft 15 does not fall from the first connecting hole 213.

In order to ensure that buckles are clamped into the slot during connection, one side of the bulge 214 relative to the insertion direction of the first connector 152 may be provided with an inclined surface or a cambered surface, the top of the first connector 152 is provided with an inclined surface or a cambered surface, or the top of the first connector 152 is configured to be hemispherical, thereby guiding the insertion of the first connector 152 and improving the convenience during assembly connection. Simultaneously, the side wall of the slot, in contact with the inclined surface or the cambered surface on the bulge 214, may also be configured to be an inclined surface or a cambered surface.

In actual arrangement, because the bulge 214 and the slot cooperate and are movably connected, the arrangement width of the slot in an axial direction is greater than the thickness of the bulge 214 to ensure that the magnetic conduction shaft 15 may reliably and flexibly rotate relative to the connecting part 212. At least two buckles are symmetrically disposed to ensure the firmness and reliability of connection.

Specifically, in order to improve the flexibility of the rotation of the magnetic conduction shaft 15 relative to the connecting part 212, the wall of the first connecting hole 213 or the magnetic conduction shaft 15 may be provided with a shaft sleeve, and the friction force on the magnetic conduction shaft 15 during rotation is reduced by the shaft sleeve, so that the magnetic conduction shaft 15 may flexibly rotate. Furthermore, the shaft sleeve may be made of a material capable of being magnetized and capable of conducting a magnetic field, thereby achieving the effect of improving the sensitivity of the detection elements 14 to induce the magnetic field.

Specifically, according to different design modes, on the premise that the change of the magnetic field on the magnetic conduction shaft 15 may be reliably induced, the detection elements 14 may be disposed on the side wall or an end or a bottom of the connecting part 212. In the embodiments of the disclosure, as shown in FIG. 5, the detection elements 14 are embedded on the side wall of the connecting part 212.

Specifically, in order to improve the sensitivity of detection, a plurality of detection elements 14 are disposed and uniformly distributed. The detection elements 14 may be disposed on the side wall, the end and the bottom of the connecting part 212. A plurality of detection elements 14 may be uniformly distributed on the side wall of the connecting part 212, or a plurality of detection elements 14 may be uniformly distributed on the end of the connecting part 212, or a plurality of detection elements 14 may be uniformly distributed on the bottom of the connecting part 212. The arrangement modes are flexible and diverse. The change of the magnetic field on the magnetic conduction shaft 15 is detected by a plurality of detection elements 14 together, thereby ensuring the accuracy of detection.

Specifically, the detection elements 14 are sensor elements capable of detecting the change of the magnetic field (such as the change of the direction of the magnetic field or the change of magnetic flux), such as a Hall sensor or a geomagnetic sensor.

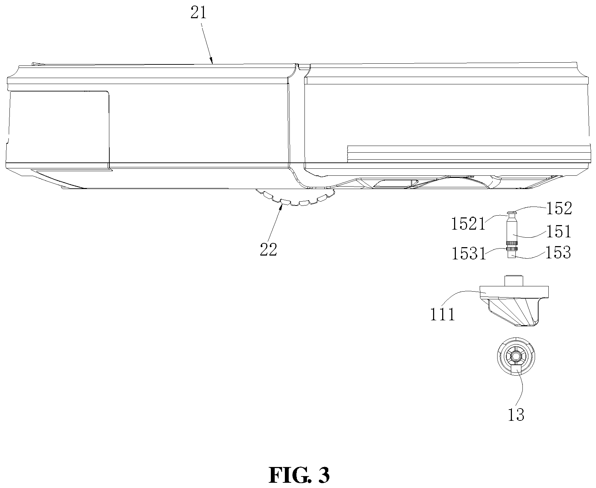

Specifically, as shown in FIG. 1 and FIG. 3, in the embodiments of the disclosure, the support frame 11 includes a frame body 111 and a second connecting hole 112 formed in the frame body 111 and configured to connect the second connector 153, and the second connector 153 is inserted in the second connecting hole 112. The depth at which the second connector 153 is inserted in the second connecting hole 112 may be the maximum proximity to the wheel 12 on the premise that the rotation of the wheel 12 is not affected, thereby improving the efficiency of magnetization by the magnet 13, and effectively conducting the magnetic field of the magnet 13. In specific connection, when the second connector 153 and the frame body 111 are movably connected, the second connector 153 and the second connecting hole 112 are in clearance fit, and under the limiting action of the second connecting structures 1531, it is possible to ensure that the second connector 153 and the frame body 111 are not separated from each other. When the second connector 153 and the frame body 111 are fixedly connected, the second connector 153 and the second connecting hole 112 are in interference fit, and under the limiting action of the second connecting structures 1531, it is possible to ensure the firmness and stability of connection between the second connector 153 and the frame body 111. When the second connector 153 and the frame body 111 are movably connected, in combination with movable connection between the first connector 152 and the connecting part 212, the rotation of the wheel 12 may be reliably achieved to achieve adjustment on the movement direction.

Specifically, the second connecting structures 1531 include positioning rings and/or positioning grooves, a wall of the second connecting hole 112 is correspondingly provided with limiting protrusions 113, the limiting protrusions 113 abut against the positioning rings, or the limiting protrusions 113 are clamped in the positioning grooves. By virtue of the corresponding cooperation between the limiting protrusions 113 and the positioning rings and/or the positioning grooves, reliable connection between the second connector 153 and the frame body 111 is achieved.

Specifically, in the embodiments of the disclosure, the connection mode between the second connector 153 and the frame body 111 is set to be fixed connection. Furthermore, a plurality of positioning rings or positioning grooves are provided, the positioning rings or the positioning grooves are disposed at intervals, and the number of limiting protrusions 113 is the same as the number of the positioning rings or the positioning grooves. Thus, by virtue of the corresponding cooperation between the plurality of limiting protrusions 113 and the positioning rings and/or the positioning grooves, the firmness of connection between the second connector 153 and the frame body 111 is ensured. Simultaneously, in order to further improve the firmness of connection, a plurality of grooves may be disposed on the positioning rings or in the positioning grooves and are configured to increase contact area with the wall of the second connecting hole 112, thereby improving the firmness of connection.

Specifically, as shown in FIG. 1 and FIG. 5, a rotating shaft 122 may be penetrated through the center of a circle of the wheel 12, and two ends of the rotating shaft 122 are correspondingly connected to the frame body 111 to achieve movable connection between the wheel 12 and the frame body 111. Of course, a rotating shaft 122 may be respectively disposed at the center of a circle of each of two sides of the wheel 12, and the rotating shaft 122 does not penetrate through the center of the circle, thereby also achieving movable connection between the wheel 12 and the frame body 111.

Specifically, in order to fix the magnet 13 on the wheel 12 to enable the magnet 13 to rotate together with the wheel 12, the wheel 12 is provided with a mounting groove 121, and then, the magnet 13 is fixed in the mounting groove 121 to achieve fixed mounting of the magnet 13. The magnet 13 and the mounting groove 121 may be connected in an interference fit, or the magnet may be fixed in the mounting groove 121 by means of gluing or embedding.

The wheel rotation detection component provided in the embodiments of the disclosure adopts the magnetic conduction shaft 15 capable of being magnetized by the magnet 13 to conduct the magnetic field, so that by virtue of the connection of the magnetic conduction shaft 15, movable connection between the support frame 11 and the main body 21 may be met; furthermore, the magnetic field of the magnet 13 is conducted to the detection elements 14 through the magnetic conduction shaft 15, so that real-time detection on the rotation condition of the wheel 12 is achieved, and the problems of larger detection error and low detection accuracy caused by far distance between the magnet 13 and a detection element 14 are overcome; and by virtue of the arrangement of the wheel rotation detection component, the accuracy of the detection result is high, under the conditions that parts are not additionally provided and additional cost and design, production and manufacturing difficulty are not increased, the problem of far distance detection between the detection elements 14 and the wheel 12 is effectively solved, and the design is ingenious.

The embodiments of the disclosure also provide a robotic cleaner. As shown in FIG. 2 to FIG. 3, the robotic cleaner includes a main body 21 and further includes the above wheel rotation detection component, and at least a part of the wheel rotation detection component is connected to the main body 21. The robotic cleaner further includes a driving wheel set 22 for driving the overall robotic cleaner to move. By virtue of the arrangement of the above wheel rotation detection component, whether the wheel 12 on the bottom of the main body 21 rotates or not may be reliably and accurately detected so as to judge whether the robotic cleaner actually moves or not, thereby avoiding the use problem caused by the fact that the robotic cleaner does not move due to slip of driving wheels. Whether the main body 21 moves or not is detected by the wheel rotation detection component, so that when the slip occurs, the cleaning path may be adjusted in time, the cleaning efficiency and the cleaning coverage are ensured, and the reliability of automatic cleaning is improved.

The above embodiments are merely preferred embodiments of the disclosure and are not intended to limit the disclosure.

## Claims

1. A wheel rotation detection component, at least a part of which is connected to a main body (21) of a supported object, wherein the wheel rotation detection component comprises a support frame (11), a wheel (12),
wherein the wheel rotation detection component further comprises a magnet (13) and at least one detection element (14) for detecting a change of a magnetic field of the magnet (13) so as to detect a rotation information of the wheel (12), the wheel (12) is movably connected to the support frame (11), the magnet (13) is fixed on the wheel (12), the wheel rotation detection component further comprises a magnetic conduction shaft (15) capable of being magnetized by the magnet (13) so as to conduct the magnetic field to the at least one detection element (14), one end of the magnetic conduction shaft (15) is connected to the support frame (11), the other end of the magnetic conduction shaft (15) is connected to the main body (21), and the detection element (14) is connected to the main body (21), wherein the support frame (11) is configured to be rotatable around the magnetic conduction shaft (15) as a rotating center to allow the support frame with the wheel (12) to rotate relative to the main body (21) so as to achieve direction adjustment and wherein by virtue of the connection of the magnetic conduction shaft (15), movable connection between the support frame (11) and the main body (21) is achieved.

2. The wheel rotation detection component of claim 1, wherein the magnetic conduction shaft (15) comprises a shaft body (151), a first connector (152) for connecting the main body (21) and a second connector (153) for connecting the support frame (11), the first connector (152) and the second connector (153) are respectively connected to two ends of the shaft body (151), the first connector (152) is provided with a first connecting structure (1521) for movably connecting with the main body (21), and the second connector (153) is provided with second connecting structures (1531) for fixedly or movably connecting with the support frame (11).

3. The wheel rotation detection component of claim 1 or 2, wherein the main body (21) comprises a base (211) and a connecting part (212) disposed on the base (211), the connecting part (212) is provided with a first connecting hole (213) for connecting the magnetic conduction shaft (15), a wall of the first connecting hole (213) is provided with a bulge (214), the first connecting structure (1521) comprises a slot, and the bulge (214) is positioned in the slot.

4. The wheel rotation detection component of claim 3, wherein the detection element (14) is disposed on a side wall or on an end or on a bottom of the connecting part (212).

5. The wheel rotation detection component of any one of claims 1 to 4, wherein a plurality of detection elements (14) are disposed and uniformly distributed.

6. The wheel rotation detection component of any one of claims 2 to 5, wherein the support frame (11) comprises a frame body (111) and a second connecting hole (112) formed in the frame body (111) and configured to connect the second connector (153), and the second connector (153) is inserted in the second connecting hole (112).

7. The wheel rotation detection component of any one of claims 2 to 6, wherein the second connecting structures (1531) comprise at least one positioning ring and/or at least one positioning groove, a wall of the second connecting hole (112) is correspondingly provided with a limiting protrusion (113), the limiting protrusion (113) abuts against the positioning ring, or the limiting protrusion (113) is clamped in the positioning groove.

8. The wheel rotation detection component of claim 7, wherein a plurality of positioning rings or positioning grooves are provided, the positioning rings or the positioning grooves are disposed at intervals, and the number of limiting protrusions (113) is the same as the number of the positioning rings or the positioning grooves.

9. The wheel rotation detection component of any one of claims 1 to 8, wherein the wheel (12) is provided with a mounting groove (121), and the magnet (13) is fixed in the mounting groove (121).

10. A robotic cleaner, comprising a main body (21) and further comprising the wheel rotation detection component of any one of claims 1 to 9, wherein at least a part of the wheel rotation detection component is connected to the main body (21).

## Patentansprüche

1. Raddrehungserfassungskomponente, von der zumindest ein Teil mit einem Hauptkörper (21) eines getragenen Objekts verbunden ist, wobei die Raddrehungserfassungskomponente einen Tragrahmen (11), ein Rad (12) umfasst,
wobei die Raddrehungserfassungskomponente ferner einen Magneten (13) und mindestens ein Erfassungselement (14) zum Erfassen einer Änderung eines Magnetfelds des Magneten (13) umfasst, um eine Drehinformation des Rades (12) zu erfassen, das Rad (12) beweglich mit dem Tragrahmen (11) verbunden ist, der Magnet (13) an dem Rad (12) befestigt ist, die Raddrehungserfassungskomponente ferner eine magnetische Leitwelle (15) umfasst, die durch den Magneten (13) magnetisiert werden kann, um das Magnetfeld zu dem mindestens einen Erfassungselement (14) zu leiten, ein Ende der magnetischen Leitwelle (15) mit dem Tragrahmen (11) verbunden ist, das andere Ende der magnetischen Leitwelle (15) mit dem Hauptkörper (21) verbunden ist, und das Erfassungselement (14) mit dem Hauptkörper (21) verbunden ist, wobei der Tragrahmen (11) so konfiguriert ist, dass er um die magnetische Leitwelle (15) als ein Drehzentrum gedreht werden kann, um es dem Tragrahmen mit dem Rad (12) zu ermöglichen, sich relativ zu dem Hauptkörper (21) zu drehen, um eine Richtungsanpassung zu erreichen und wobei durch die Verbindung der magnetischen Leitwelle (15) eine bewegliche Verbindung zwischen dem Tragrahmen (11) und dem Hauptkörper (21) erreicht wird.

2. Raddrehungserfassungskomponente gemäß Anspruch 1, wobei die magnetische Leitwelle (15) einen Wellenkörper (151), einen ersten Verbinder (152) zum Verbinden des Hauptkörpers (21) und einen zweiten Verbinder (153) zum Verbinden des Tragrahmens (11) umfasst, der erste Verbinder (152) und der zweite Verbinder (153) jeweils mit zwei Enden des Wellenkörpers (151) verbunden sind, der erste Verbinder (152) mit einer ersten Verbindungsstruktur (1521) zum beweglichen Verbinden mit dem Hauptkörper (21) versehen ist, und der zweite Verbinder (153) mit zweiten Verbindungsstrukturen (1531) zum festen oder beweglichen Verbinden mit dem Stützrahmen (11) versehen ist.

3. Raddrehungserfassungskomponente gemäß Anspruch 1 oder 2, wobei der Hauptkörper (21) eine Basis (211) und ein auf der Basis (211) angeordnetes Verbindungsteil (212) umfasst, das Verbindungsteil (212) mit einem ersten Verbindungsloch (213) zum Verbinden der magnetischen Leitwelle (15) versehen ist, eine Wand des ersten Verbindungslochs (213) mit einer Ausbuchtung (214) versehen ist, die erste Verbindungsstruktur (1521) einen Schlitz umfasst, und die Ausbuchtung (214) im Schlitz positioniert ist.

4. Raddrehungserfassungskomponente gemäß Anspruch 3, wobei das Erfassungselement (14) an einer Seitenwand oder an einem Ende oder an einem Boden des Verbindungsteils (212) angeordnet ist.

5. Raddrehungserfassungskomponente gemäß einem der Ansprüche 1 bis 4, wobei eine Vielzahl von Erfassungselementen (14) angeordnet und gleichmäßig verteilt sind.

6. Raddrehungserfassungskomponente gemäß einem der Ansprüche 2 bis 5, wobei der Stützrahmen (11) einen Rahmenkörper (111) und ein zweites Verbindungsloch (112) umfasst, das in dem Rahmenkörper (111) ausgebildet ist und so konfiguriert ist, dass es den zweiten Verbinder (153) verbindet, und der zweite Verbinder (153) in das zweite Verbindungsloch (112) eingeführt wird.

7. Raddrehungserkennungskomponente gemäß einem der Ansprüche 2 bis 6, wobei die zweiten Verbindungsstrukturen (1531) mindestens einen Positionierungsring und/oder mindestens eine Positionierungsnut umfassen, eine Wand des zweiten Verbindungslochs (112) entsprechend mit einem Begrenzungsvorsprung (113) versehen ist, der Begrenzungsvorsprung (113) am Positionierungsring anliegt, oder der Begrenzungsvorsprung (113) in der Positionierungsnut eingeklemmt ist.

8. Raddrehungserfassungskomponente gemäß Anspruch 7, wobei eine Vielzahl von Positionierungsringen oder Positionierungsnuten vorgesehen sind, die Positionierungsringe oder Positionierungsnuten in Intervallen angeordnet sind und die Anzahl der Begrenzungsvorsprünge (113) gleich der Anzahl der Positionierungsringe oder der Positionierungsnuten ist.

9. Raddrehungserfassungskomponente gemäß einem der Ansprüche 1 bis 8, wobei das Rad (12) mit einer Montagenut (121) versehen ist und der Magnet (13) in der Montagenut (121) befestigt ist.

10. Reinigungsroboter, umfassend einen Hauptkörper (21) und ferner umfassend die Raddrehungserfassungskomponente gemäß einem der Ansprüche 1 bis 9, wobei mindestens ein Teil der Raddrehungserfassungskomponente mit dem Hauptkörper (21) verbunden ist.

## Revendications

1. Composant de détection de rotation de roue, dont une partie au moins est reliée à un corps principal (21) d'un objet supporté, dans lequel le composant de détection de rotation de roue comprenant un cadre de support (11), une roue (12),
dans lequel le composant de détection de rotation de roue comprend en outre un aimant (13) et au moins un élément de détection (14) chargé de détecter un changement dans un champ magnétique de l'aimant (13) de manière à détecter une information de rotation de la roue (12), la roue (12) est reliée de façon mobile au cadre de support (11), l'aimant (13) est fixé à la roue (12), l'élément de détection de rotation de roue comprenant en outre un arbre de conduction magnétique (15) capable d'être magnétisé par l'aimant (13) de manière à conduire de champ magnétique vers l'au moins un élément de détection (14), une extrémité de l'arbre de conduction magnétique (15) est reliée au cadre de support (11), l'autre extrémité de l'arbre de conduction magnétique (15) est reliée au corps principal (21), et l'élément de détection (14) est relié au corps principal (21), dans lequel le cadre de support (11) est configuré pour pouvoir tourner autour de l'arbre de conduction magnétique (15) comme centre de rotation pour permettre au cadre de support (11) avec la roue (12) de tourner par rapport au corps principal (21) de manière à obtenir un ajustement de direction, et dans lequel une connexion mobile entre le cadre de support (11) et le corps principal (21) est obtenue grâce à la connexion de l'arbre de conduction magnétique (15).

2. Composant de détection de rotation de roue selon la revendication 1, dans lequel l'arbre de conduction magnétique (15) comprend un corps d'arbre (151), un premier connecteur (152) pour la connexion du corps principal (21) et un deuxième connecteur (153) pour la connexion du cadre de support (11), le premier connecteur (152) et le deuxième connecteur (153) sont respectivement reliés à deux extrémités du corps d'arbre (151), le premier connecteur (152) est pourvu d'une première structure de connexion (1521) pour la connexion mobile au corps principal (21), et le deuxième connecteur (153) est pourvu de deuxièmes structures de connexion (1531) pour la connexion fixe ou mobile au cadre de support (11).

3. Composant de détection de rotation de roue selon la revendication 1 ou 2, dans lequel le corps principal (21) comprend une base (211) et une partie de connexion (212) disposée sur la base (211), la partie de connexion (212) est pourvue d'un premier trou de connexion (213) pour la connexion de l'arbre de conduction magnétique (15), une paroi du premier trou de connexion (213) est pourvue d'une bosse (214), la première structure de connexion (1521) comprend une fente, et la bosse (214) est positionnée dans la fente.

4. Composant de détection de rotation de roue selon la revendication 3, dans lequel l'élément de détection (14) est disposé sur une paroi latérale ou à une extrémité ou sur une partie inférieure de la partie de connexion (212).

5. Composant de détection de rotation de roue selon l'une quelconque des revendications 1 à 4, dans lequel une pluralité d'éléments de détection (14) sont disposés et répartis uniformément.

6. Composant de détection de rotation de roue selon l'une quelconque des revendications 2 à 5, dans lequel le cadre de support (11) comprend un corps de cadre (111) et un deuxième trou de connexion (112) formé dans le corps de cadre (111) et configuré pour la connexion du deuxième connecteur (153), et le deuxième connecteur (153) est inséré dans le deuxième trou de connexion (112).

7. Composant de détection de rotation de roue selon l'une quelconque des revendications 2 à 6, dans lequel les deuxièmes structures de connexion (1531) comprennent au moins une bague de positionnement et/ou au moins une rainure de positionnement, une paroi du deuxième trou de connexion (112) est pourvue de manière correspondante d'une saillie de limitation (113), la saillie de limitation (113) bute contre la bague de positionnement, ou la saillie de limitation (113) est serrée dans la rainure de positionnement.

8. Composant de détection de rotation de roue selon la revendication 7, dans lequel il est prévu une pluralité de bagues de positionnement ou de rainures de positionnement, les bagues de positionnement ou les rainures de positionnement sont disposées à des intervalles, et le nombre de saillie de limitation (113) est identique au nombre de bagues de positionnement ou de rainures de positionnement.

9. Composant de détection de rotation de roue selon l'une quelconque des revendications 1 à 8, dans lequel la roue (12) est pourvue d'une rainure de montage (121), et l'aimant (13) est fixé dans la rainure de montage (121).

10. Robot nettoyeur comprenant un corps principal (21) et comprenant en outre le composant de détection de rotation de roue selon l'une quelconque des revendications 1 à 9, dans lequel une partie au moins du composant de détection de rotation de roue est reliée au corps principal (21).
